# EUROPEAN PATENT APPLICATION

(11) **EP 1 220 421 A2**
(43) Date of publication of application: **03.07.2002**
(21) Application number: 01310518.4
(22) Date of filing: 17.12.2001
(51) Int. Cl.: H02K 5/173

(54) **Small size rotory motor**

(30) Priority: 26.12.2000 JP 2000394768
(71) Applicant: KABUSHIKI KAISHA TOPCON, Tokyo-to (JP)
(72) Inventor: Ohishi, Masahiro, Itabashi-ku, Tokyo-to (JP); Godo, Etsuji, Itabashi-ku, Tokyo-to (JP)
(74) Representative: Roberts, Gwilym Vaughan

(57) **Abstract**

A small size rotary motor comprising a rotating body (2), a stator (18) and bearings (5, 6), wherein the rotating body (2) is supported rotatably on the stator (8) via bearings (5, 6), and a magnetic force in an axial direction acts on the rotating body (2) between the rotating body (2) and the stator (8).

## Description

The present invention relates to a small size rotary motor, and in particular, to a high-precision small size rotary motor which has a prestress function and can be used by itself.

For a small size rotary motor to be used in a precision machine, in particular, in an optical instrument, high rotation accuracy is required. In general, a rotation of a motor is transmitted to an object to be driven via a rotation transmitting mechanism, which comprises components such as gears. It has been practiced to increase the accuracy of rotation by improving the accuracy of control relating to rotation such as control of a rotating speed, control of a rotation angle, etc., and by reducing backlash of bearings in the rotation transmitting mechanism.

However, with respect to small size equipments and devices, there are now increasing demands for a smaller and more lightweight design, and the rotary motor is very often used alone without using the rotation transmitting mechanism. When the rotary motor is used alone, it is necessary to improve the control relating to rotation and to reduce backlash itself of an output shaft of the rotary motor for the purpose of attaining higher accuracy.

In the past, as a method to reduce backlash of the output shaft of the rotary motor, it has been practiced to give some prestress to the bearings, which are provided in order that the rotary motor itself supports the output shaft.

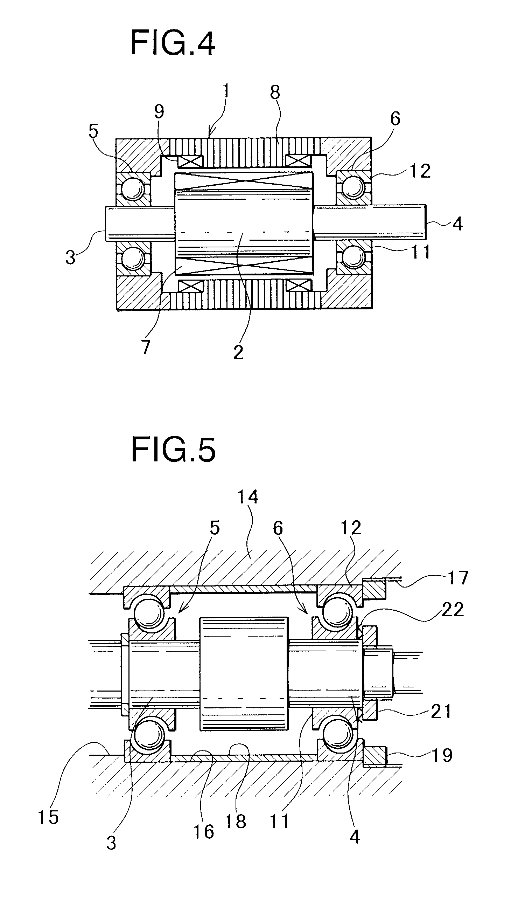

Description will be given below on a conventional type rotary motor referring to Fig. 4.

In an outer casing 1, a rotor 2 is accommodated. On the rotor 2, shafts 3 and 4 are extended from both ends respectively, and one of the shafts, i.e. the shaft 4, serves as an output shaft. The shafts 3 and 4 are rotatably supported in the outer casing 1 via ball bearings 5 and 6.

On an outer peripheral surface of the rotor 2, permanent magnets 7 are provided in a circumferential direction so as to have different magnetic poles alternately. The central part of the outer casing 1 facing to the permanent magnets 7 is a stator 8. The stator is equally divided as necessary in a circumferential direction. On divided portions of the stator 8, coils 9 are wound. By supplying an electric current to the coils 9, the rotor 2 is rotated.

It is unavoidable that error occurs in the structure of the ball bearings 5 and 6 during the manufacturing process. In particular, backlash in an axial direction of the rotor 2 occurs unavoidably, although in very small extent. For this reason, it has been practiced in the past to give prestress in the axial direction between an inner race 11 and an outer race 12 of each of the ball bearings 5 and 6 to reduce and eliminate backlash of the ball bearings 5 and 6.

Fig. 5 exaggeratedly shows the state that prestress in the axial direction is given between the inner race 11 and the outer race 12 of each of the ball bearings 5 and 6. Supporting structure of each of the outer races 12 of the ball bearings 5 and 6 differs from the structure shown in Fig. 4. However, it is the same when the outer race is restrained from movement in the axial direction.

A bearing retainer 14 has a relief bore 15, a bearing engaging bore 16 having a diameter slightly larger than a diameter of the relief bore 15, and a screw bore 17 having a diameter larger than the diameter of the bearing engaging bore 16. The ball bearings 5 and 6 are engaged in the bearing engaging bore 16. A collar 18 is attached between the ball bearings 5 and 6. The outer race 12 of the ball bearing 6 is fastened by a ring nut 19 screwed in the screw bore 17, and the outer races 12 of the ball bearings 5 and 6 are restrained in the axial direction.

The inner race 11 of the ball bearing 5 is engaged on the shaft 3, and the inner race 11 of the ball bearing 6 is engaged on the shaft 4. The inner race 11 of the ball bearing 5 is restrained from displacement in a leftward direction (in the figure), and the inner race 11 of the ball bearing 6 is restrained by a nut 21 screwed on the shaft 4 from movement in a rightward direction (in the figure). Between the nut 21 and the inner race 11 of the ball bearing 6, a wave washer 22 is provided in a compressed state.

By reaction force of the wave washer 22, a force (prestress) is given between the inner races 11 and 11 of the ball bearings 5 and 6 in such direction as to move their inner races closer to each other. As a result, backlash in the axial direction the ball bearings 5 and 6 itselves have is eliminated. At the same time, the backlash in radial directions of the ball bearings 5 and 6 is also completely eliminated. Then, the shaft 4 outputs rotation, causing neither vibration nor backlash in the axial direction.

Similarly, if prestress is given on the outer races 12 and 12 in the directions to move them closer to each other, the backlash is eliminated.

In the ball bearings as described above, backlash differs slightly from each other according to the error during the manufacturing process. For this reason, if priority is given on the accuracy, backlash must be adjusted in each individual case by manual operation. If it is too loose, the accuracy is decreased. If fastened too tightly, service life of the ball bearings is shortened. Thus, it is very difficult to adjust, and the accuracy depends much on the skill of the worker.

When prestress of a constant value is given by the means such as wave washer, the structure must be produced in a complicated design. Further, in a motor used in a small size device such as optical instrument, a rotary motor having only one bearing is often used to reduce the driving energy and to decrease torque loss of the bearing. In the conventional mechanism to reduce backlash as described above, prestress is given between the two bearings. Thus, there has been such problem that it is not possible to give prestress when the motor has only one bearing.

It is an object of the present invention to provide a small size rotary motor, by which it is possible to give prestress even when the motor is of simple structure and there is only one bearing, and further to give adequate prestress without regard to the skill of the worker.

To attain the above object, the present invention provides a small size rotary motor comprising a rotating body, a stator and bearings, wherein the rotating body is supported rotatably on the stator via bearings, and a magnetic force in an axial direction acts on the rotating body between the rotating body and the stator. Also, the present invention provides the small size rotary motor as described above, wherein a magnetic plate in a doughnut-like shape is provided on the stator side, the magnetic plate is provided at a face-to-face position to an end surface of the rotating body, and a magnetic force acts between the magnetic plate and the rotating body. Further, the present invention provides the small size rotary motor as described above, wherein the magnetic plate is made of silicon steel. Also, the present invention provides the small size rotary motor as described above, wherein a hollow type fixed shaft is fixed on the stator side, a space is formed in a cylindrical shape around the hollow type fixed shaft and a hollow type rotating body is engaged on the hollow type fixed shaft via the bearings, wherein a magnetic force in the axial direction acts on the rotating body. Further, the present invention provides the small size rotary motor as described above, wherein the magnetic plate is provided at a face-to-face position to end surfaces of magnets provided around the rotating body. Also, the present invention provides the small size rotary motor as described above, wherein the end surface of the rotating body is provided at a face-to-face position to a portion where the hollow type fixed shaft and the stator side are fixed, and a magnetic force acts between the end surface of the rotating body and the portion. Further, the present invention provides the small size rotary motor as described above, wherein the portion is made of silicon steel. Also, the present invention provides the small size rotary motor as described above, wherein an optical member is provided in a hollow portion of the rotating body.

Embodiments of the invention will now be described, by way of example, with reference to the drawings, of which:
Fig. 1 is a cross-sectional view of a first embodiment of the present invention;
Fig. 2 is a cross-sectional view of a second embodiment of the present invention;
Fig. 3 is a schematical block diagram of a light wave distance measuring system, which is an application example of the present invention;
Fig. 4 is a cross-sectional view of a conventional example; and
Fig. 5 is a drawing to explain a mechanism to give prestress on bearings in the conventional example.

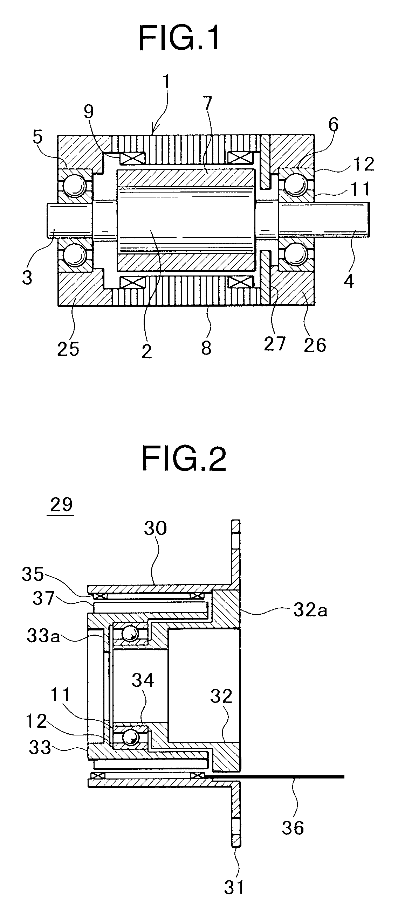

Fig. 1 shows a first embodiment of the present invention, which is applied on a small size rotary motor having two bearings.

In Fig. 1, the same component as in Fig. 4 is referred by the same symbol, and detailed description is not given here.

An outer casing 1 is composed so that a stator 8 is sandwiched by end plates 25 and 26. A ball bearing 5 is engaged with the end plate 25, and a ball bearing 6 is engaged with the end plate 26. Between the stator 8 and the end plate 26, a magnetic plate 27 is sandwiched, and the magnetic plate 27 is magnetically insulated from the stator 8 and the end plate 26.

A shaft 3 extended from a rotor 2 is supported by the ball bearing 5, and a shaft 4 is supported by the ball bearing 6. In particular, although details are not shown in the figure, outer races of the ball bearings 5 and 6 are restrained from displacement in an axial direction. At least one of the inner races of the ball bearings 5 and 6 is fixed on the rotor 2 and is integrally displaced (i.e. moves with it).

The magnetic plate 27 is designed in a doughnut-like shape, and its inner periphery is at a face-to-face position to the permanent magnet 7 with a very small gap between the magnetic plate 27 and the permanent magnet 7. Its inner diameter is equal to or slightly smaller than an outer diameter of the rotor 2. As the material of the magnetic plate 27, a ferromagnetic material with lower hysteresis, e.g. a silicon steel plate being the same type of material as the stator 8, is used.

With the arrangement as described above, the magnetic plate 27 is magnetized by the permanent magnet 7. Attraction force is generated between the permanent magnet 7 and the magnetic plate 27, and the rotor 2 is pushed in a rightward direction in Fig. 1.

The rotor 2 is displaced in the axial direction by an extent of backlash of the ball bearings 5 and 6. Because outer races 12 of the ball bearings 5 and 6 are restrained in the axial direction, when the rotor 2 is displaced, relative displacement occurs between the inner races 11 and the outer races 12 of at least one of the ball bearings 5 and 6. As a result, prestress is given, and backlash of the bearings is eliminated.

With respect to the backlash of the rotor 2, i.e. the shaft 4, it would be sufficient if the backlash is eliminated on one of the bearings. Even when prestress is not given to the other bearing, there is no influence on the accuracy.

In case it is designed in such manner that both of the inner races 11 of the ball bearings 5 and 6 are fixed on the shaft 3 and the shaft 4, the backlash is not necessarily at a constant value because of the error during the manufacture of the ball bearings 5 and 6, and equal prestress does not occur on the ball bearings 5 and 6 at the same time. However, it would be sufficient from the viewpoint of function if the backlash is completely eliminated on one of the bearings, and accordingly the error in the manufacturing process of individual bearings causes no problem.

In the present embodiment, magnetic force is utilized, and not mechanical repulsive force. As a result, the structure is extremely simplified, and there is no need to perform physical adjustment by manual operation. Also, complicated fabrication procedure requiring high precision is not needed.

In the above embodiment, it may be designed in such manner that the magnetic plate 27 is divided in the circumferential direction and is magnetically integrated with the stator 8, and in such manner that the magnetic plate 27 is magnetized by the coils 9, and only attraction force occurs between the permanent magnet 7 and the magnetic plate 27.

Fig. 2 shows a second embodiment. In this embodiment, the invention is applied on a small size rotary motor 29 having one bearing.

A casing 30 in a cylindrical shape corresponding to the outer casing 1 shown in Fig. 1 has a flange 31, and the casing 30 is fixed on a given support unit via the flange 31.

A hollow type fixed shaft 32 is fixed and integrated with the casing 30 via a flange unit 32a, and a space in a cylindrical shape is formed between the casing 30 and the hollow type fixed shaft 32. A rotary cylinder 33 is accommodated in this cylindrical space and is rotatably engaged on the hollow type fixed shaft 32 via a bearing 34. To fix the hollow type fixed shaft 32 and the casing 30, a fixing member in a ring-like shape may be separately provided instead of the flange unit 32a, and the hollow type fixed shaft 32 and the casing 30 may be fixed via the fixing member. Or, a projecting flange may be provided inside the casing 30, and the casing 30 and the hollow type fixed shaft 32 may be fixed via the flange.

The inner cylinder of the casing 30 serves as a stator. On a surface of the inner cylinder, coils 35 are fixed at a predetermined pitch along the circumferential direction. Lead wires 36 connected to the coil 35 are passed through the flange 31 and the flange unit 32a and is extended, and the lead wires 36 are connected to a power source and a control unit (not shown).

On an outer cylindrical surface of the rotary cylinder 33, magnets 37 are fixed at face-to-face positions to the coil 35 at a predetermined pitch in the circumferential direction. End surfaces (at the right in the figure) of the magnets 37 face to the flange unit 32a with a very small gap between them. As the material of the hollow type fixed shaft 32, a ferromagnetic material with lower hysteresis, e.g. silicon steel, is used as in the magnetic plate 27. The rotary cylinder 33 may be manufactured by sintering. The casing 30 and the flange unit 32a may be integrated with each other. Further, the hollow type fixed shaft 32 itself may be made of a nonmagnetic metal, and a magnetic metal (magnetic plate) may be buried in the portion of the flange unit 32a facing to the magnet.

On the rotary cylinder 33, an inner collar 33a is provided at a position not to interfere with the hollow type fixed shaft 32, and an object to be driven is mounted on the inner collar 33a. That is, the rotary cylinder 33 acts as an output shaft. Also, a projection or a recess (not shown), etc. are formed on the inner collar 33a, and positioning between the object to be driven and the rotary cylinder 33 can be determined by the projection.

Attraction force caused by the magnetic force acts between the magnet 37 and the flange unit 32a, and the rotary cylinder 33 is attracted toward the flange unit 32a. When a force acts in a rightward direction (in the figure) on the rotary cylinder 33, prestress is given between the inner race 11 and the outer race 12 of the bearing 34, and backlash of the bearing 34 can be eliminated. When electric current is supplied to the coil 35 via the lead wire 36, the rotary cylinder 33 is rotated with high accuracy, causing neither vibration of the rotation shaft nor displacement in the axial direction.

According to the present embodiment, prestress is given on the small size rotary motor having one bearing, which could not be achieved in the conventional prestress type system, and high-precision rotation can be accomplished.

The present invention provides an arrangement, in which a magnetic force is applied between a rotary portion and a fixed portion. For instance, the rotary cylinder 33 may be made of a ferromagnetic material, and a magnet to attract the rotary cylinder 33 may be arranged on the hollow type fixed shaft 32. Further, it may be designed in such manner that repulsive force is generated by the magnet.

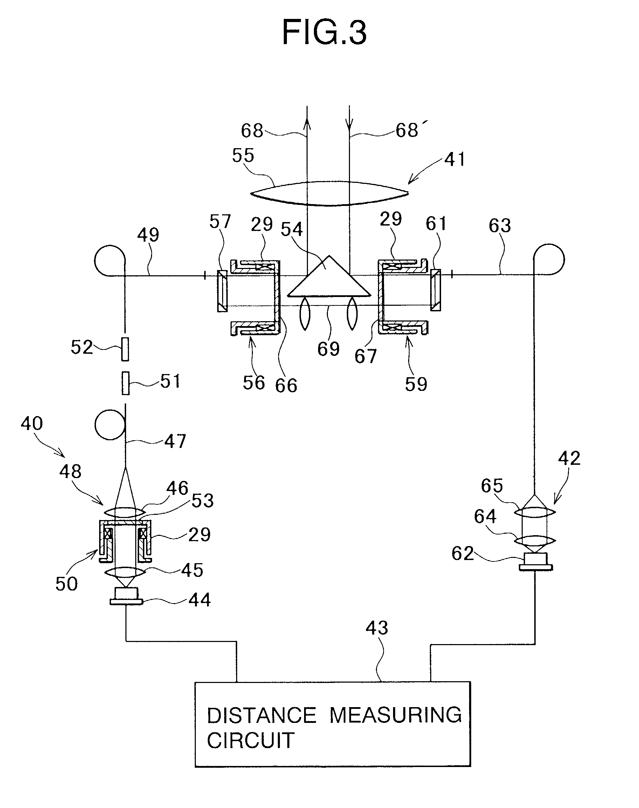

Next, description will be given on an application example of the second embodiment referring to Fig. 3.

In the application example, the rotary motor 29 shown in Fig. 2 is used as a driving source of a mixing means, an optical path switching means, and a light amount adjusting means of an optical system in a light wave distance measuring system.

The optical system primarily comprises a light projecting unit 40, a distance measuring optical unit 41, a photodetection unit 42, and a distance measuring circuit 43.

The light projecting unit 40 comprises a semiconductor laser 44 for emitting a laser beam, an optical expander 48 for entering the laser beam emitted from the semiconductor laser 44 to an optical fiber 47 via lenses 45 and 46, a mixing means 50 provided between the lens 45 and the lens 46, and gradient index lenses 51 and 52 for entering the laser beam projected from the optical fiber 47 to an optical fiber 49 by changing a position angle.

Now, description will be given on the mixing means 50 referring to Fig. 2.

The rotary motor 29 is disposed in such manner that an optical path is aligned with the rotation shaft, and a phase plate 53 is mounted on the inner collar 33a of the rotary motor 29. Electric current is supplied to the coil 35, and the rotary cylinder 33 is rotated. As a result, the phase plate 53 is rotated, and a speckle pattern on the laser beam emitted from the semiconductor laser 44 can be eliminated.

Description will be given below on the distance measuring optical unit 41.

On an optical axis of an incoming and outgoing distance measuring light, a prism 54 and an objective lens 55 are disposed. With the prism 54 at the center, a light amount adjusting means 56 is disposed on an optical axis of the incident light to the prism 54, and an optical path switching means 59 is disposed on an optical axis of the reflection light from the prism 54. Further, a splitting prism 57 is disposed on an entrance side of the light amount adjusting means 56, and a splitting prism 61 is disposed on an exit side of the optical path switching means 59, and these components make up the distance measuring optical unit 41.

The photodetection unit 42 comprises an optical fiber 63 for guiding the laser beam projected from the splitting prism 61 toward a photodetection element 62, and condenser lenses 64 and 65 for converging the laser beam to the photodetection element 62.

The distance measuring circuit 43 drives the semiconductor laser 44 to emit the light and calculates a distance to an object to be measured based on a photodetection signal from the photodetection element 62.

As the light amount adjusting means 56, the rotary motor 29 shown in Fig. 2 is used. In the light amount adjusting means 56, a light amount adjusting plate 66 is mounted on the inner collar 33a of the rotary motor 29. The light amount adjusting plate 66 is an optical filter with its density varied along the circumferential direction, and a transmission amount of the laser beam is changed according to a rotating position of the light amount adjusting plate 66.

The optical path switching means 59 comprises an optical path switching plate 67 mounted on the inner collar 33a of the rotary motor 29. The optical path switching plate 67 has two slits each in an arcuate shape. The two slits are deviated in positions from each other both in a radial direction and in a circumferential direction. A reflection distance measuring light 68' passes through one slit, while an inner reference light 69 passes through the other slit. By rotating the optical path switching plate 67 by the rotary motor 29, the laser beam to reach the photodetection element 62 can be switched over to the reflected distance measuring light 68' or to the inner reference light 69.

When the semiconductor laser 44 is driven by the distance measuring circuit 43, the mixing means 50 is driven, and the phase plate 53 is rotated. By the rotation of the phase plate 53 and by the gradient index lenses 51 and 52, the speckle pattern of the laser beam can be eliminated. The laser beam projected from the optical fiber 49 is split to the distance measuring light 68 and the inner reference light 69 by the splitting prism 57. With respect to the distance measuring light 68 and the inner reference light 69, depending on the distance to the object to be measured and also on the reflection status from the object to be measured, the light amount adjusting means 56 rotates the light amount adjusting plate 66, and the rotating position of the light amount adjusting plate 66 is selected so that light amounts of the receiving light at the photodetection element 62 are equalized with each other.

At a predetermined time interval, the optical path switching plate 67 is rotated in a normal or reverse direction by the optical path switching means 59, and the reflected distance measuring light 68' and the inner reference light 69 to be entered to the photodetection unit 42 are switched over alternately.

At the distance measuring circuit 43, the distance to the object to be measured is calculated based on the photodetection signal of the reflected distance measuring light 68' and the inner reference light 69 received by the photodetection element 62.

As described above, the phase plate 53, the light amount adjusting plate 66, and the optical path switching plate 67 are rotated by the rotary motor 29. Further, the backlash of the bearing 34 is eliminated by the magnetic force between the flange unit 32a and the magnet 37.

It is designed in such manner that the laser beam passes through hollow portion of the rotary motor 29, and rotation center of each of the phase plate 53, the light amount adjusting plate 66, and the optical path switching plate 67 can be approximately aligned with the optical axis of the laser beam. Therefore, the entire area of each of the phase plate 53, the light amount adjusting plate 66 and the optical path switching plate 67 can be used without any waste, and it is possible to design these components in a considerably compact size.

The object to be rotated by the hollow type motor is not limited to the phase plate 53, the light amount adjusting plate 66, the optical path switching plate 67, etc., and it may be a moving part of a focusing mechanism. By the use of the hollow type motor, it is possible to eliminate the use of gearing mechanisms for power transmission between a rotating body or a moving part and the motor, and this contributes to the simplified design of the structure.

According to the present invention, a rotating body is supported on a stator via a bearing, and a magnetic force in an axial direction acts on the rotating body between the rotating body and the stator, and prestress is given on the bearing by the magnetic force. As a result, prestress can be given to bearings in a system with simple structure. Even when there is one bearing, prestress can be given. Adequate prestress can be given without regard to the skill of the worker.

## Claims

1. A rotary motor comprising a rotating body, a stator and bearings, wherein said rotating body is supported rotatably on said stator via at least one bearing, and a magnetic force in an axial direction acts on said rotating body between said rotating body and said stator.

2. A rotary motor according to claim 1, wherein a magnetic plate in a doughnut-like shape is provided on the stator side, said magnetic plate is provided at a face-to-face position to an end surface of the rotating body, and a magnetic force acts between said magnetic plate and the rotating body.

3. A rotary motor according to claim 2, wherein the magnetic plate is made of silicon steel.

4. A rotary motor according to claim 1, wherein a hollow type fixed shaft is fixed on the stator side, a space is formed in a cylindrical shape around said hollow type fixed shaft and a hollow type rotating body is engaged on said hollow type fixed shaft via the bearings, wherein a magnetic force in the axial direction acts on said rotating body.

5. A rotary motor according to claim 2, wherein the magnetic plate is provided at a face-to-face position to end surfaces of magnets provided around the rotating body.

6. A rotary motor according to claim 4, wherein the end surface of the rotating body is provided at a face-to-face position to a portion where the hollow type fixed shaft and the stator side are fixed, and a magnetic force acts between said end surface of the rotating body and said portion.

7. A rotary motor according to claim 6, wherein said portion is made of silicon steel.

8. A rotary motor according to claim 4, wherein an optical member is provided in a hollow portion of the rotating body.

9. An optical system comprising a light projecting unit and at least one of a mixing means, an optical path switching means and a light amount adjusting means including a motor as claimed in any preceding claim.
